# EUROPEAN PATENT APPLICATION

(11) **EP 4 279 242 A1**
(43) Date of publication of application: **22.11.2023**
(21) Application number: 23174045.7
(22) Date of filing: 17.05.2023
(51) Int. Cl.: B29C 43/36, B29C 43/02, B29C 43/00, B29C 43/14, B29K 27/18, B29K 105/00, B29L 31/06, B29L 31/26

(54) **METHOD FOR MANUFACTURING A ROD-SHAPED FLUOROPOLYMER PRODUCT**

(30) Priority: 18.05.2022 BE 202205378
(71) Applicant: Vanéflon nv, 9220 Hamme (BE)
(72) Inventor: Vander Stichele, Nicolas, 9220 Hamme (BE)
(74) Representative: Brantsandpatents bv

(57) **Abstract**

The invention relates to a method for manufacturing a rod-shaped fluoropolymer product, comprising the following steps: machine pressing a powder comprising a fluoropolymer, thus resulting in a cold-pressed rod-shaped fluoropolymer product; sintering the cold-pressed rod-shaped fluoropolymer product; cooling a heated cold-pressed rod-shaped fluoropolymer product, obtained after the sintering, thus resulting in a final cold-pressed rod-shaped fluoropolymer product; wherein during the machine pressing said powder is pressed by means of at least two pressing means, wherein a first pressing means according to a first axial direction and a second pressing means according to a second axial direction exert a pressing pressure on the powder, wherein both axial directions are orthogonal, where the first axial direction runs in a vertical direction, and where the second axial direction runs in a horizontal direction. The invention also relates to a rod-shaped fluoropolymer product.

## Description

### TECHNICAL FIELD

The invention relates in a first aspect to a method for manufacturing a rod-shaped fluoropolymer product.

In a second aspect, the invention relates to a rod-shaped fluoropolymer product.

### PRIOR ART

Fluoropolymer products, such as polytetrafluoroethylene (PTFE or Teflon) products, are desirable for use in many high-quality objects because of their high temperature resistance, good insulating properties, good anti-adhesion properties and high chemical resistance. Indeed, fluoropolymer products are widely used as flange seals, envelope seals, V-rings (Chevron rings), shaft seals, compressor rings, ball valve seats and backup rings, among others, for applications in several industries including aerospace, automotive, food, petrochemical, oil and gas and medical industry. Such sealing rings are mainly manufactured from a rod-shaped fluoropolymer product.

US20200331215 describes a method for forming a composite part, by means of pressing using a first mold and a second mold, configured to form at least part of a mold cavity between them, and shaping a reinforcing material located in the mold cavity.

A method for manufacturing a rod-shaped fluoropolymer product is known per se from BE1024586. A known method involves machine pressing a powder at room temperature, which powder comprises a fluoropolymer. Before the mechanical pressing, a mold is filled with the mentioned powder, after which a pressing means exerts a pressing pressure on the powder in a vertical direction. Next, the pressed rod-shaped product is sintered in a heated oven. Finally, the heated rod-shaped product is cooled resulting in a final pressed rod-shaped fluoropolymer product. This known method involves some problems and drawbacks.

A problem of the known method is that after pressing and sintering the rod-shaped product is subject to deformations. This is particularly detrimental to the uniformity of the rod-shaped product and consequently the deformed product is usually industrially unusable.

There is therefore a need for an improved method that allows the production of stress-free rod-shaped fluoropolymer products. These products are not subject to deformations after pressing and sintering, so that sealing rings made from such products have minimal distortion.

Known methods press powder in a vertical direction. This results in an uneven pressure distribution in the rod-shaped product. This is particularly disadvantageous when removing the pressed rod-shaped product from the mold as this can cause cracking.

The present invention aims to find a solution for at least some of the above problems.

### SUMMARY OF THE INVENTION

In a first aspect, the invention relates to a method for manufacturing a rod-shaped fluoropolymer product according to claim 1. More specifically, the method according to the first aspect of the invention comprises that during the machine pressing said powder is pressed by means of at least two pressing means, wherein a first pressing means according to a first axial direction and a second pressing means according to a second axial direction, exert a pressing pressure on the powder, wherein both axial directions are orthogonal, wherein the first axial direction runs in a vertical direction, and wherein the second axial direction runs in a horizontal direction.

An advantage of the method according to the first aspect is that the final cold-pressed rod-shaped fluoropolymer product is stress-free. As a result, the rod-shaped product will not deform and can be used to produce, among other things, sealing rings that have minimal distortion.

An additional advantage of the method is that an optimal pressure distribution is obtained in the rod-shaped product. In particular because pressing means exert a pressing pressure according to two orthogonal axial directions. In this way, crack formation in the rod-shaped product is avoided.

A remarkable advantage of the method is that the method is suitable for manufacturing rod-shaped fluoropolymer products in various geometric shapes, wherein the rod-shaped products are finally completely stress-free in any geometric shape.

An additional advantage of the method is that rod-shaped products with narrow and stable tolerances are manufactured. A surprising advantage is that little material has to be machined on a final pressed rod-shaped product. This advantage results in part because pressing means exert a pressing pressure according to two axial directions. As a result, the powder is pressed in an optimum manner according to a shape of the mold. This is particularly advantageous when working with expensive materials, as little material is wasted.

Preferred embodiments of the first aspect of the invention are described in claims 2 to 13.

In a second aspect, the invention relates to a rod-shaped fluoropolymer product according to claim 14. More specifically, the rod-shaped product according to the second aspect of the invention comprises at least 30% by weight of fluoropolymer and further at most 30% by weight of additives.

A preferred embodiment of the second aspect of the invention is described in claim 15.

### DESCRIPTION OF THE FIGURES

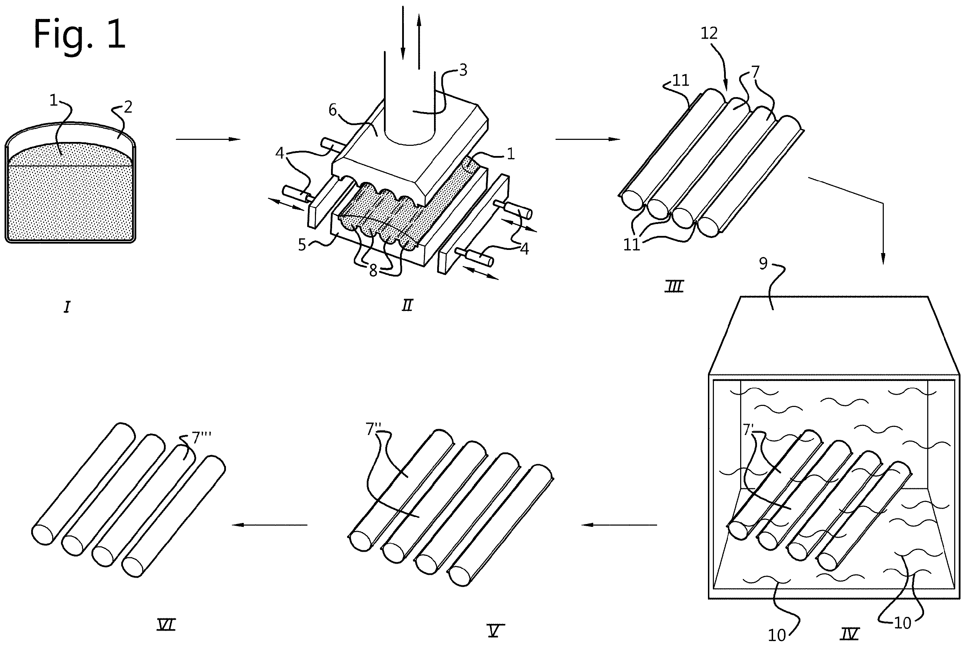

**Fig.** 1 schematically illustrates a method according to preferred embodiments of the present invention.

### DETAILED DESCRIPTION

The invention relates to a method for manufacturing a rod-shaped fluoropolymer product.

Unless otherwise defined, all terms used in the description of the invention, including technical and scientific terms, have the meanings as commonly understood by those skilled in the art of the invention. For a better understanding of the description of the invention, the following terms are explained explicitly.

In this document, "a/an" and "the" refer to both the singular and the plural, unless the context clearly presupposes otherwise. For example, "a segment" means one or more than one segment.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of the quantity where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a method for manufacturing a rod-shaped fluoropolymer product, comprising the following steps:
- machine pressing a powder comprising a fluoropolymer at a temperature of 19 to 25°C and at a pressing pressure of 50 to 250 bar, thus resulting in a cold-pressed rod-shaped fluoropolymer product;
- sintering the cold-pressed rod-shaped fluoropolymer product at a temperature of at least 340°C;
- cooling a heated cold-pressed rod-shaped fluoropolymer product, obtained after the sintering, to a temperature of 19 to 25°C, thus resulting in a final cold-pressed rod-shaped fluoropolymer product; wherein during the machine pressing said powder is pressed by means of at least two pressing means, wherein a first pressing means according to a first axial direction and a second pressing means according to a second axial direction, exert a pressing pressure on the powder, wherein both axial directions are orthogonal, wherein the first axial direction runs in a vertical direction, and wherein the second axial direction runs in a horizontal direction.

An advantage of the method according to the first aspect is that the final cold-pressed rod-shaped fluoropolymer product is stress-free. As a result, the rod-shaped product will not deform and can be used to produce, among other things, sealing rings that have minimal distortion.

An additional advantage of the method is that an optimal pressure distribution is obtained in the rod-shaped product. In particular because pressing means exert a pressing pressure according to two orthogonal axial directions. In this way, crack formation in the rod-shaped product is avoided.

A remarkable advantage of the method is that the method is suitable for manufacturing rod-shaped fluoropolymer products in various geometric shapes, wherein the rod-shaped products are finally stress-free in any geometric shape.

An additional advantage of the method is that rod-shaped products with narrow and stable tolerances are manufactured. A surprising advantage is that little material has to be machined on a final pressed rod-shaped product. This advantage results in part because pressing means exert a pressing pressure according to two orthogonal axial directions. As a result, the powder is pressed in an optimum manner according to a shape of the mold. This is particularly advantageous when working with expensive materials, as little material is wasted.

According to a preferred embodiment, the final cold-pressed rod-shaped fluoropolymer product is machined and/or polished. An advantage of such an embodiment is that rounded rod-shaped products are obtained with narrow tolerances.

According to a preferred form, the fluoropolymer is polytetrafluoroethylene (PTFE or Teflon). The terms "polytetrafluoroethylene", "PTFE" and "Teflon" mean an ethylene polymer in which all hydrogen atoms are replaced by fluorine with CAS number 9002-84-0.

According to a preferred embodiment, the powder comprises one or more fluoropolymers.

According to a preferred embodiment, the powder is at least partially composed of free-flowing powder, preferably the powder is completely free-flowing. An advantage of such an embodiment is that free-flowing powder is easier to process than non-free-flowing powder. After all, with a non-free-flowing powder, particles of the powder stick together due to factors such as moisture and cohesion forces.

According to a preferred embodiment, the pressing pressure is increased stepwise during machine pressing according to the following pressure development:
- increasing the pressing pressure in the second axial direction to about 40%, preferably 30-50% of a final pressure in the second axial direction
- increasing the pressing pressure in the first axial direction to about 20%, preferably 10-30% of a final pressure in the first axial direction;
- increasing the pressing pressure in the second axial direction to about 60%, preferably 50-70% of the final pressure in the second axial direction;
- increasing the pressing pressure in the first axial direction to about 40%, preferably 30-50% of the final pressure in the first axial direction;
- increasing the pressing pressure in the second axial direction to about 80%, preferably 70-90% of the final pressure in the second axial direction;
- increasing the pressing pressure in the first axial direction to about 60%, preferably 50-70% of the final pressure in the first axial direction;
- increasing the pressing pressure in the second axial direction to the final pressure in the second axial direction;
- increasing the pressing pressure in the first axial direction to the final pressure in the second axial direction.

Such an embodiment has the advantage that the pressing pressure is increased stepwise. As a result, an optimum pressure distribution is achieved in the rod-shaped product, so that crack formation in the rod-shaped product is avoided.

According to a preferred embodiment, the final pressure in the first axial direction is maintained constant for at least one minute, preferably the final pressure is maintained constant for at least one minute and maintained constant for a maximum of 240 minutes.

According to a preferred embodiment, the final pressure in the second axial direction is maintained constant for at least one minute, preferably the final pressure is maintained constant for at least one minute and maintained constant for a maximum of 240 minutes.

According to a preferred embodiment, the pressing pressure is increased at a rate in a range of 0.1% to 1%, preferably 0.2% to 0.9%, more preferably 0.3% to 0.8% and most preferably 0.4% to 0.7% of final pressure per second. A speed lower than 0.1% of the final pressure per second is not economically relevant and a speed higher than 1% of the final pressure per second involves too high a risk of crack formation due to an uneven pressure distribution in the rod-shaped product. The aforementioned range is therefore an optimum range for the rate at which the pressing pressure is increased.

According to a preferred embodiment, the machine pressing is performed by means of a mold extending in a longitudinal direction, the mold comprising two mold halves, the mold opening in a direction transverse to the longitudinal direction, and wherein the powder is introduced into the mold. An advantage of such an embodiment is that molds with various shapes can be used, each mold resulting in a different type of rod-shaped product. For example, different in geometric shape, length and/or diameter or width.

According to a further embodiment, one mold half comprises one mold stamp which comprises at least one recess, which recess extends in a longitudinal direction from the mold and which is suitable for pressing one rod. In other embodiments, one mold half has one mold stamp which comprises two, three or even four recesses suitable for simultaneously pressing respectively two, three and four rods in one mold. Mold stamps equipped with multiple recesses are suitable for pressing and manufacturing rods with smaller diameters or widths, i.e. a diameter or width of less than 40 mm. Mold stamps equipped with a single recess are suitable for pressing and manufacturing rods with larger diameters or widths, i.e. a diameter or width greater than 40 mm.

According to a further embodiment, the mold has a diameter or a width of maximally 300 mm, preferably the diameter or the width lies in a range of 5-200 mm and most preferably in a range of 10-150 mm.

According to a further embodiment, the mold has a length of up to 125 cm, preferably the length is in a range of 5 to 100 cm.

According to a preferred embodiment, the powder is uniformly distributed over the mold before the machine pressing step. Such an embodiment has the advantage that a uniform rod-shaped product is obtained.

According to a preferred embodiment, the powder is first preconditioned at a temperature of 19 to 25°C for 0.5 to 6 hours prior to the machine pressing step. Such an embodiment has the advantage that the risk of crack formation during subsequent pressing and sintering is limited. After all, pressed rod-shaped products with a temperature lower than 19°C have a greater chance of cracking during a later sintering cycle.

According to a preferred embodiment, the powder is uniformly mixed in preparation for machine pressing. Such an embodiment has the advantage that a rod-shaped product with a uniform composition is obtained.

According to a preferred embodiment, the following temperature progression is applied during the sintering step:
- heating from a temperature of 19 to 25°C to a temperature of 295 to 305°C at a heating rate of 25 to 31°C per hour, and then an increase to a temperature of 310 to 340°C at a heating rate of 4 to 12°C per hour;
- maintaining the temperature of 310 to 340°C;
- heating to a temperature of 350 to 400°C at a heating rate of 4 to 12°C per hour; and
- maintaining the temperature of 350 to 400°C.

Such a temperature progression is excellently suited for sintering a cold-pressed rod-shaped product, whereby cracks, tears or other shape deviations of the rod-shaped product are avoided as much as possible.

According to a preferred embodiment, a turbulent air flow is created around the cold-pressed rod-shaped fluoropolymer product during the step of sintering and/or cooling, preferably a turbulent air flow is created both during sintering and cooling. Such an embodiment has the advantage that the turbulent air flow ensures a uniform distribution of the air present, so that the rod-shaped product heats up or cools down evenly. Consequently, this ultimately results in a uniform rod-shaped product without cracks or breaks.

According to a preferred embodiment, the following temperature progression is applied during the cooling step:
- cooling from a temperature of 350 to 400°C to a temperature of 285 to 295°C at a cooling rate of 5 to 18°C per hour; and
- cooling to a temperature of 19 to 25°C at a cooling rate of 30 to 50°C per hour.

Such a temperature progression is excellently suited for cooling a heated rod-shaped product, while avoiding cracks, tears or other shape deviations of the rod-shaped product.

According to a preferred embodiment, one or more additives are added to the powder before the machine pressing step, the additives being selected from a group comprising glass fiber, graphite, carbon, carbon fiber, bronze and stainless steel. Such an embodiment has the advantage that a wide range of rod-shaped products can be manufactured with different possible compositions, depending on the desired application.

In a second aspect, the invention relates to a rod-shaped fluoropolymer product obtained according to a method according to the first aspect, wherein the rod-shaped fluoropolymer product comprises at least 30% by weight of fluoropolymer and wherein the rod-shaped product further comprises at most 30% by weight of additives.

According to a preferred embodiment, the rod-shaped fluoropolymer product has a density of 1.8 to 2.4 g/cm³.

According to a preferred embodiment, the rod-shaped fluoropolymer product has a diameter or a width of maximally 300 mm, preferably the diameter or the width is in a range of 5-200 mm and most preferably in a range of 10-150 mm.

According to a preferred embodiment, the rod-shaped fluoropolymer product has a length of maximally 125 cm, preferably the length is in a range of 5 to 100 cm.

The inventors have discovered that rod-shaped fluoropolymer products can be obtained that have the same quality as non-rod-shaped fluorine products. Known methods, such as BE1024586, fall short when it comes to producing rod-shaped fluoropolymer products. This method does not allow to make long large or small rods with the same quality. However, the method according to the first aspect of the present invention allows to make rod-shaped fluoropolymer products with the same desired quality as non-rod-shaped fluoropolymer products.

The rod-shaped fluoropolymer product obtained according to the second aspect of this invention preferably has a Shore D hardness of 49 to 72, preferably of 50.5 to 70.5 according to DIN 53 505.

In a preferred form, the rod-shaped fluoropolymer product has a tensile strength of 7 to 45 MPa, preferably from 8.5 to 43.5 MPa at 23°C and according to DIN 53 455.

In a preferred form, the rod-shaped fluoropolymer product has an elongation at break from 20% to 620%, preferably from 30% to 610% at 23°C and according to DIN 53 455.

In a preferred form, the rod-shaped fluoropolymer product has a deformation of from 1% to 7.4%, preferably from 1.2% to 7.2% after exposure to a tensile force of 4 MPa for 24 hours at 260°C according to ASTM-D621.

According to a preferred embodiment, the rod-shaped fluoropolymer product has a cylindrical shape. According to another embodiment, the rod-shaped fluoropolymer product is cuboid.

In what follows, the invention is described by means of a non-limiting example which will illustrate the invention, and which is not intended to or should not be construed as limiting the scope of the invention.

### EXAMPLE

The invention will now be further explained on the basis of the following example, without however being limited to this.

The example concerns a specific method for manufacturing a rod-shaped fluoropolymer product, in this specific case a rod-shaped PTFE product.

Fig. 1 schematically shows steps I to VI of a method according to preferred embodiments of the present invention. For this example, a free-flowing powder 1 of PTFE comprising 70-80 weight percent PTFE and 20-30 weight percent carbon is assumed. A free-flowing powder 1 is easier to process than a non-free-flowing powder 1. After all, with a non-free-flowing powder 1, particles stick together due to factors such as moisture and cohesion forces.

In a first step I, said powder 1 is preconditioned in a container 2 for 0.5 to 6 hours at a temperature between 19 and 25°C. This pre-conditioning reduces, among other things, the chance of crack formation during a later sintering cycle. After all, pressed products with a temperature lower than 19°C have a greater chance of cracking during a subsequent sintering cycle.

In a second step II, a desired amount of powder 1 is weighed and the powder 1 is then placed in a lower mold half 5, which mold half 5 forms part of a mold extending in a longitudinal direction. The lower mold half 5 has one or more recesses 8 extending in a longitudinal direction, which recesses 8 have dimensions that hardly deviate, preferably deviate by a maximum of 5%, more preferably deviate by a maximum of 5%, even more preferably deviate by a maximum of 1%, and most preferably deviate at most 0.5% at different positions along said longitudinal direction. In the present example, the lower mold half 5 has four recesses 8 suitable for pressing four rod-shaped products 7. The four recesses 8 are made according to the same dimensions and are intended to obtain four quasi-identical rod-shaped products 7 after going through steps I to VI of the method.

The weighed powder 1 is placed in the lower mold half 5. Next, an upper mold half 6, which is implemented in a similar shape as the lower mold half 5, with a side comprising recesses 8 is lowered and is connected to the lower mold half 5. Hereafter, an increased pressure is applied to the powder 1 by means of two pressing means, wherein a first pressing means 3 according to a first axial direction and a second pressing means 4 according to a second axial direction apply a pressing pressure to the powder 1. Here, both axial directions are orthogonal and the first axial direction runs in a vertical direction and the second axial direction in a horizontal direction.

The pressing pressure is increased stepwise in order to obtain a stress-free, uniform and crack-free pressed rod-shaped product 7. More specifically, the pressing pressure is increased according to the pressure development below:
- increasing the pressing pressure in the second axial direction to about 40% of a final pressure in the second axial direction
- increasing the pressing pressure in the first axial direction to about 20% of a final pressure in the first axial direction;
- increasing the pressing pressure in the second axial direction to about 60% of the final pressure in the second axial direction;
- increasing the pressing pressure in the first axial direction to about 40% of the final pressure in the first axial direction;
- increasing the pressing pressure in the second axial direction to about 80% of the final pressure in the second axial direction;
- increasing the pressing pressure in the first axial direction to about 60% of the final pressure in the first axial direction;
- increasing the pressing pressure in the second axial direction to the final pressure in the second axial direction;
- increasing the pressing pressure in the first axial direction to the final pressure in the second axial direction.

The final pressure applied is in the range of 10 to 100 MPa, which final pressure is kept constant for at least one minute in both the first axial direction and the second axial direction, preferably 1 to 60 minutes, more preferably 1 to 30 minutes.

Subsequently, the mold halves 5, 6 are opened and the thus obtained assembly 12 of cold-pressed rod-shaped products 7 is removed from the lower mold half 5. The assembly 12 comprises the rod-shaped products 7 that are still connected to each other by common burrs 11. A rod-shaped product 7 is always connected to only one other rod-shaped product 7 by means of a common burr 11.

A third step III involves resting the rod-shaped product 7 for 2 to 5 hours. After all, after the loss of the increased pressure during cold pressing in step II, cracks or tears can occur in the pressed powder because trapped air can expand again. After cold pressing, the pressed powder is therefore still subject to internal stress and air inclusions. For this reason it is advantageous to allow the cold-pressed rod-shaped product 7 to rest for a few hours after the cold-pressing in step II before sintering the product in a next step. After resting, the rod-shaped products 7 are separated from each other by cutting through the common burrs 11, whereby separate rod-shaped products 7 are obtained.

A fourth step IV concerns the sintering and subsequent cooling of the rod-shaped product 7. For this purpose, the product 7 is placed in a hot air oven 9 with a turbulent air flow distribution. The turbulent distribution of an air flow 10 is obtained by a forced air circulation in the oven 9. In the oven, the cold-pressed rod-shaped PTFE product 7 will be heated to a heated cold-pressed rod-shaped PTFE product 7'.

The following temperature progression is applied during sintering:
- heating from a temperature of 19 to 25°C to a temperature of 295 to 305°C at a heating rate of 25 to 31°C per hour, and then an increase to a temperature of 310 to 340°C at a heating rate of 4 to 12°C per hour;
- maintaining the temperature of 310 to 340°C;
- heating to a temperature of 350 to 400°C at a heating rate of 4 to 12°C per hour; and
- maintaining the temperature of 350 to 400°C.

During cooling, the following temperature progression is applied:
- cooling from a temperature of 350 to 400°C to a temperature of 285 to 295°C at a cooling rate of 5 to 18°C per hour; and
- cooling to a temperature of 19 to 25°C at a cooling rate of 30 to 50°C per hour.

In a fifth step V, after completion of the sintering and cooling from step IV, the sintered and cold-pressed rod-shaped product 7 is removed from the oven 9. The final cold-pressed product 7" contains a minimum of air inclusions, cracks and tears, and has a high temperature resistance, good insulating properties, good anti-adhesion properties, a high chemical resistance, and is inert. It follows from this that a rod-shaped product 7", obtained according to a method according to the present invention, is extremely suitable for applications in various industries.

In a sixth step VI, the final cold-pressed rod-shaped products 7" are machined and/or polished. In this way, rounded rod-shaped products are obtained with narrow tolerances.

Below is an overview of the meaning of the numbers used in the figures:
- 1: Powder
- 2: Container
- 3: First pressing means
- 4: Second pressing means
- 5: Lower mold half
- 6: Upper mold half
- 7: Cold-pressed rod-shaped product
- 7': Heated cold-pressed rod-shaped product
- 7": Final cold-pressed rod-shaped product, after sintering and cooling
- 7'": Machined and/or polished cold-pressed rod-shaped product
- 8: Recess
- 9: Oven
- 10: Turbulent air flow
- 11: Burr
- 12: Assembly of pressed rod-shaped products

### EXAMPLE 2

A ring with an outer diameter of 8.06 mm and an inner diameter of 6.4 mm and a width of 2.8 mm was produced according to a method according to the first aspect from high carbon-filled PTFE (25%), wherein the following steps were followed:
- machine pressing a powder comprising a fluoropolymer at a temperature of 19 to 25°C and at a pressing pressure of 50 to 250 bar, thus resulting in a cold-pressed rod-shaped fluoropolymer product, wherein during the machine pressing said powder is pressed by means of at least two pressing means, wherein a first pressing means according to a first axial direction and a second pressing means according to a second axial direction, exert a pressing pressure on the powder, wherein both axial directions are orthogonal, wherein the first axial direction runs in a vertical direction, and wherein the second axial direction runs in a horizontal direction;
- sintering the cold-pressed rod-shaped fluoropolymer product at a temperature of at least 340°C; and
- cooling a heated cold-pressed rod-shaped fluoropolymer product, obtained after the sintering, to a temperature of 19 to 25°C, thus resulting in a final cold-pressed rod-shaped fluoropolymer product.

A tensile test was performed on the obtained ring and at least 33% elongation at break was obtained.

The present invention should not be construed as being limited to the embodiments described above and certain modifications or changes may be added to the examples described without having to re-evaluate the appended claims. For example, the present invention has been described with reference to cylindrical rod-shaped products, but it should be clear that the invention can also be applied to cuboid rod-shaped products with an adjustment of the recesses in the mold halves.

## Claims

1. Method for manufacturing a rod-shaped fluoropolymer product, comprising the steps of:
- machine pressing a powder (1), comprising a fluoropolymer, at a temperature of 19 to 25°C and at a pressing pressure of 50 to 250 bar, thus resulting in a cold-pressed rod-shaped fluoropolymer product (7);
- sintering the cold-pressed rod-shaped fluoropolymer product (7) at a temperature of at least 340°C;
- cooling a heated cold-pressed rod-shaped fluoropolymer product (7'), obtained after the sintering, to a temperature of 19 to 25°C, thus resulting in a final cold-pressed rod-shaped fluoropolymer product (7");
**characterized in that,** during the machine pressing said powder (1) is pressed by means of at least two pressing means (3, 4), wherein a first pressing means (3) according to a first axial direction and a second pressing means (4) according to a second axial direction exert a pressing pressure on the powder (1), wherein both axial directions are orthogonal, wherein the first axial direction runs in a vertical direction, and wherein the second axial direction runs in a horizontal direction.

2. Method according to claim 1, **characterized in that** during the machine pressing the pressing pressure is increased stepwise according to the following pressure development:
- increasing the pressing pressure in the second axial direction to about 40% of a final pressure in the second axial direction
- increasing the pressing pressure in the first axial direction to about 20% of a final pressure in the first axial direction;
- increasing the pressing pressure in the second axial direction to about 60% of the final pressure in the second axial direction;
- increasing the pressing pressure in the first axial direction to about 40% of the final pressure in the first axial direction;
- increasing the pressing pressure in the second axial direction to about 80% of the final pressure in the second axial direction;
- increasing the pressing pressure in the first axial direction to about 60% of the final pressure in the first axial direction;
- increasing the pressing pressure in the second axial direction to the final pressure in the second axial direction;
- increasing the pressing pressure in the first axial direction to the final pressure in the second axial direction.

3. Method according to claim 2, **characterized in that** the final pressure in the first axial direction is kept constant for at least one minute.

4. Method according to claim 2, **characterized in that** the final pressure in the second axial direction is kept constant for at least one minute.

5. Method according to claim 2, **characterized in that** the pressing pressure is increased at a rate in a range of 0.1% to 1% of the final pressure per second.

6. Method according to any of the preceding claims, **characterized in that** the machine pressing is performed by means of a mold extending in a longitudinal direction, the mold comprising two mold halves (5, 6), the mold opening in a direction transverse to the longitudinal direction, and wherein the powder is introduced into the mold.

7. Method according to claim 6, **characterized in that** the powder (1) is uniformly distributed over the mold before the machine pressing step.

8. Method according to any of the preceding claims, **characterized in that** the powder (1) is first preconditioned at a temperature of 19 to 25°C for 0.5 to 6 hours prior to the machine pressing step.

9. Method according to any of the preceding claims, **characterized in that** the powder (1) is mixed uniformly in preparation for machine pressing.

10. Method according to any of the preceding claims, **characterized in that** the following temperature progression is applied during the sintering step:
- heating from a temperature of 19 to 25°C to a temperature of 295 to 305°C at a heating rate of 25 to 31°C per hour, and then an increase to a temperature of 310 to 340°C at a heating rate of 4 to 12°C per hour;
- maintaining the temperature of 310 to 340°C;
- heating to a temperature of 350 to 400°C at a heating rate of 4 to 12°C per hour; and
- maintaining the temperature of 350 to 400°C.

11. Method according to any of the preceding claims, **characterized in that** a turbulent air flow (10) is created around the cold-pressed rod-shaped fluoropolymer product (7) during the step of sintering and/or cooling.

12. Method according to any of the preceding claims, **characterized in that** the following temperature progression is applied during the cooling step:
- cooling from a temperature of 350 to 400°C to a temperature of 285 to 295°C at a cooling rate of 5 to 18°C per hour; and
- cooling to a temperature of 19 to 25°C at a cooling rate of 30 to 50°C per hour.

13. Method according to any of the preceding claims, **characterized in that** one or more additives are added to the powder (1) before the machine pressing step, the additives being selected from a group comprising glass fiber, graphite, carbon, carbon fiber, bronze and stainless steel.

14. Rod-shaped fluoropolymer product obtained according to a method according to any of the preceding claims 1 to 13, **characterized in that** the rod-shaped fluoropolymer product comprises at least 30% by weight of fluoropolymer and wherein the rod-shaped product further comprises at most 30% by weight of additives.

15. Rod-shaped fluoropolymer product according to claim 14, **characterized in that** the rod-shaped fluoropolymer product has an elongation at break of from 20% to 620%, preferably from 30% to 610% at 23°C and according to DIN 53 455.
